(19) Europäisches Patentamt / European Patent Office / Office européen des brevets

(11) **EP 2 947 431 B1**

(12) **EUROPÄISCHE PATENTSCHRIFT**

(45) Veröffentlichungstag und Bekanntmachung des Hinweises auf die Patenterteilung:
**29.05.2019 Patentblatt 2019/22**

(51) Int Cl.:
**G01G 19/08** (2006.01)

(21) Anmeldenummer: **15168647.4**

(22) Anmeldetag: **21.05.2015**

(54) **VERFAHREN ZUR BESTIMMUNG EINER GEWICHTSKRAFT EINER NUTZLAST**

METHOD FOR DETERMINING A WEIGHT OF A PAYLOAD

PROCÉDÉ DE DÉTERMINATION D'UN POIDS D'UNE CHARGE UTILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2014 DE 102014209695**

(43) Veröffentlichungstag der Anmeldung:
**25.11.2015 Patentblatt 2015/48**

(73) Patentinhaber: **Deere & Company**
**Moline, IL 61265 (US)**

(72) Erfinder:
• **Ballaire, Frederic**
  **67434 Neustadt (DE)**
• **Kremmer Dr., Martin**
  **68163 Mannheim (DE)**

(74) Vertreter: **John Deere GmbH & Co. KG**
**Global Intellectual Property Services**
**John-Deere-Straße 70**
**68163 Mannheim (DE)**

(56) Entgegenhaltungen:
**EP-A1- 0 433 669    EP-A1- 0 625 696**

**Beschreibung**

Die Erfindung betrifft ein Verfahren zur Bestimmung einer Gewichtskraft $F_G$ einer von einem landwirtschaftlichen Arbeitsfahrzeug über einen Dreipunktkraftheber getragenen Nutzlast.

Landwirtschaftliche Arbeitsfahrzeuge werden als Traktoren heute in der Landwirtschaft für verschiedene Arbeiten mit unterschiedlichen Anbaugeräten bestückt. Die Anbaugeräte können an den Dreipunktkraftheber eines Traktors angehängt werden. Für die Bedienperson des Traktors ist es grundsätzlich wichtig, Kenntnis von der Masse des Anbaugeräts zu haben und zwar sowohl von der Masse des Anbaugeräts an sich als auch von einer Masse einer Füllung des Anbaugeräts einschließlich einer Veränderung der Füllung während des Betriebs. Eine Kenntnis dieser Masse ist wichtig, um aus Fahrstabilitätsgründen Mindestvorderachslasten nicht zu unterschreiten, sofern denn das Anbaugerät an den Dreipunktkraftheber am Traktorheck angebracht ist. Andererseits dürfen aber auch maximal zulässige Achslasten an der Vorderachse und der Hinterachse nicht überschritten werden. Schließlich ist aus betriebstechnischen Gründen bei Anbaugeräten, die mit Streugut, Dünger, Saatgut oder ähnlichen Materialien gefüllt sind, eine Kenntnis der angebauten Masse und deren Veränderung während des Betriebs von Bedeutung. Auch bei Anbaugeräten, mit denen Transportoperationen durchgeführt werden, ist eine Kenntnis über sich verändernde Massen zweckmäßig. Zu nennen sind hier Hecklader, Ballengabeln oder Siloblockschneider. Nur durch Kenntnis dieser Massen und ihrer Veränderung ist eine Aussage möglich, welche Gesamtmasse beispielsweise eines Streuguts oder an Ballen während eine Betriebszyklus verteilt beziehungsweise transportiert wurde.

Im Stand der Technik werden zur Gewichtsmessung unter anderem statische Radlastwaagen eingesetzt. Aus der Differenz der Masse des leeren Traktors zu der Masse des vollen Traktors kann die Masse der verarbeiteten Ladung bestimmt werden. Solche Messungen sind ungenau und nicht für eine dynamische Erfassung von zyklisch stattfindenden Ladevorgängen geeignet. Zur dynamischen Gewichtsmessung sind sogenannte Wiegerahmen bekannt, die zwischen Dreipunktkraftheber und Anbaugerät angeordnet werden, das heißt als verbindendes Glied zwischen beiden fungieren. Hierdurch wird zunächst der Schwerpunkt des Anbaugeräts nach hinten verlagert, was zu einer Verringerung der zur Verfügung stehenden Hubkraft des Dreipunktkrafthebers führt aber auch der Fahrstabilität des Schleppers abträglich ist. Schließlich ist nicht zu vernachlässigen, dass die Wiegerahmen an sich stabil und schwer ausgeführt sind, um Anbaugerätegewichte bis zur Hubkraftgrenze in der Koppelebene tragen zu können.

EP 0 625 696 A1 zeigt ein Verfahren und eine Vorrichtung zum Wiegen einer Traktorlast. Hierbei wird eine Kraft in zwei unteren Tragarmen durch eine Kraftmessvorrichtung in den Verbindungsösen gemessen. Weiterhin wird eine zusätzliche Kraft im Oberlenker an der Verbindungsöse gemessen, zusammen mit einer Winkelerfassung.

EP 0 433 669 A1 beschreibt ein System zur dynamischen Stabilisierung von Bewegungen einer landwirtschaftlich nutzbaren Zugmaschine. Hierbei wird ein Kraftmessbolzen im Unterlenker, ein Lagesensor im Anbaugerät, ein Radarsensor und ein Drehzahlgeber verwendet, um Nickbewegungen um eine horizontal liegende, quer zur Fahrzeugrichtung verlaufende Achse aktiv zu dämpfen.

Die Verwendung von Kraftmessbolzen erfordert deren Montage und die Anschlussverkabelung der Kraftmessbolzen mit dem Fahrzeug, wenn das Anbaugerät gewechselt wird.

Ausgehend hiervon besteht die Aufgabe der vorliegenden Erfindung darin eine dynamische Gewichtsmessung unter Verzicht auf eine zusätzliche Messvorrichtung zwischen Traktor und Anbaugerät bereitzustellen, so dass die Verwendung von Kraftmessbolzen vermieden wird und der Einrichtungsaufwand bei einem Wechsel des Anbaugeräts sinkt.

Die Aufgabe wird gelöst durch ein Verfahren nach Anspruch 1.

Erfindungsgemäß wird unterschieden zwischen der Wirkungsrichtung einer Kraft und dem Betrag einer Kraft. Sofern lediglich von einer Kraft gesprochen wird, ist hiermit sowohl deren Betrag als auch deren Wirkungsrichtung gemeint. Des Weiteren werden die Kräfte lediglich in der x-z-Ebene des Traktors betrachtet, wobei dies einer vertikal gerichteten Längsebene des Traktors entspricht.

Durch das erfindungsgemäße Verfahren kann zunächst auf die bestehende Kraftmesseinrichtung am Stützlager einen Unterlenkers zurückgriffen werden. Weiterhin sind lediglich die Sensormittel vorzusehen. Es kann darauf verzichtet werden, eine separate und schwere Wiegevorrichtung an dem Anbaugerät oder zwischen Anbaugerät und Traktor anzubringen. Weiterhin ist das erfindungsgemäße Verfahren auch in der Lage bei nicht waagerecht stehendem Traktor ein genaues Messergebnis zu liefern, da die Wirkungsrichtung der Gewichtskraft $F_G$ immer zum Erdmittelpunkt zeigt und mit in die Gewichtsbestimmung eingeht.

Bevorzugt wird mittels eines Momentengleichgewichts um das Stützlager eine senkrecht auf den Unterlenker wirkende Querkraft $F_{Uquer}$ bestimmt. Von Vorteil ist hierbei, dass sowohl die Wirkungsrichtung als auch der Betrag der Stangenkraft $F_S$ und auch der Abstand $I_1$ des Angriffspunktes der Stangenkraft $F_S$ von dem Stützlager bekannt ist. Bei der Querkraft $F_{Uquer}$ wird davon ausgegangen, dass diese an dem dem Stützlager entgegengesetzten Ende des Unterlenkers angreift, insofern die Länge $I_U$ des Unterlenkers als Hebelarm anzunehmen ist. Die Querkraft $F_{Uquer}$ berechnet sich somit nach der Gleichung

$$F_{\text{Uquer}} = \frac{F_{\text{Ssenkrecht}} * l_1}{l_{\text{U}}}$$

Bevorzugt wird mittels der Stützkraft $F_L$ eine längs auf den Unterlenker wirkende Längskraft $F_{\text{Uparallel}}$ bestimmt. Von Vorteil ist hierbei, dass sowohl die Wirkungsrichtung als auch der Betrag der Stützkraft $F_L$ in dem Stützlager des Unterlenkers mittels der Kraftmesseinrichtung bestimmt wird. Die Längskraft $F_{\text{Uparalle}}$, berechnet sich nach der Gleichung

$$F_{\text{Uparallel}} = -F_{\text{Sparallel}} + \sqrt{F_L{}^2 - (F_{\text{Usenkr}} - F_{\text{Ssenkr}})^2}$$

Die ersten Sensormittel umfassen einen Beschleunigungssensor oder Neigungssensor. Ein derartiger Sensor ist kostengünstig bereitzustellen.

Die dritten Sensormittel umfassen zur Bestimmung der Stangenkraft $F_S$ einen Drucksensor zur Erfassung eines hydraulischen Drucks in einem Hydraulikzylinder des Dreipunktkrafthebers. Mit einem Drucksensor kann in einfacher Weise der Druck im Hydraulikzylinder bestimmt werden.

Die dritten Sensormittel umfassen einen ersten Lagesensor zur Erfassung einer Winkelposition $\varphi_H$ eines Hubarms des Dreipunktkrafthebers. Hiermit kann in einfacher Weise ein momentaner Winkel des Hubarms bezogen auf eine definierte Richtung, beispielsweise eine Horizontale, bestimmt werden.

Bevorzugt wird eine Wirkungsrichtung und ein Betrag der Stangenkraft $F_S$ aus dem hydraulischen Druck in einem Hydraulikzylinder, der Winkelposition $\varphi_H$ des Hubarms, einem Abstand $l_1$ des Stützlagers von einem Anlenkpunkt der Hubspindel an den Unterlenker und der Länge $l_2$ der Hubspindel ermittelt. Hierbei ist von Vorteil, dass es sich um bekannte geometrische Maße des Dreipunktkrafthebers handelt und der Zylinderdruck und der Hubarmwinkel in einfacher Weise sensorisch zu messen ist.

Die dritten Sensormittel umfassen einen zweiten Lagesensor zur Erfassung einer Winkelposition $\varphi_U$ des Unterlenkers. Hiermit kann in einfacher Weise ein momentaner Winkel des Unterlenkers bezogen auf eine definierte Richtung, beispielsweise eine Horizontale, bestimmt werden.

Bevorzugt wird eine Wirkungsrichtung und ein Betrag der Stangenkraft $F_S$ aus dem hydraulischen Druck in einem Hydraulikzylinder, der Winkelposition $\varphi_H$ des Hubarms, der Winkelposition $\varphi_U$ des Unterlenkers und einem Abstand $l_1$ des Stützlagers von einem Anlenkpunkt der Hubspindel an den Unterlenker ermittelt. Hierbei kann in vereinfachender Weise auf die durch den zweiten Lagesensor ermittelte Winkelposition $\varphi_H$ des Hubarms zurückgegriffen werden.

Die zweiten Sensormittel umfassen einen Dehnmessstreifen zur Erfassung einer Kraft des Oberlenkers oder einen Drucksensor zur Erfassung eines hydraulischen Drucks des hydraulisch ausgeführten Oberlenkers. Diese Art der Sensormittel sind einfach bereitzustellen.

Bevorzugt wird der Betrag der Gewichtskraft $F_G$
in einem von der Wirkungsrichtung der Gewichtskraft $F_G$, dem Betrag der Haltekraft $F_O$ und der Unterlenkerstützkraft $F_U$ aufgespannten Kräftedreieck
als Abstand von dem Angriffspunkt der Unterlenkerstützkraft $F_U$ zu einem Schnittpunkt zwischen dem senkrecht auf der Wirkungsrichtung der Gewichtskraft $F_G$ stehenden Betrag der Haltekraft $F_O$ bestimmt. Diese grafische Konstruktion des Betrages der Gewichtskraft $F_G$ bietet den Vorteil einer gewissen Fehlertoleranz gegenüber Messungenauigkeiten.

Die Aufgabe wird ebenfalls gelöst durch eine Einrichtung zur Durchführung eines Verfahrens nach den Ansprüchen 1 bis 6 zur Bestimmung einer Gewichtskraft $F_G$ einer von einem landwirtschaftlichen Arbeitsfahrzeug über einen Dreipunktkraftheber getragenen Nutzlast.

Das erfindungsgemäße Verfahren zur Bestimmung einer Gewichtskraft $F_G$ wird anhand der nachfolgenden Figuren beschrieben. Hierin zeigen

Figur 1   landwirtschaftliches Arbeitsfahrzeug mit einem Dreipunktkraftheber;
Figur 2   zu messende, isolierte Nutzlast und daran angreifende Kräfte von Oberlenker und Unterlenker;
Figur 3   Kräfteplan von infolge der angehängten Nutzlast angreifenden Kräften;
Figur 4   Kinematik eines Dreipunktkrafthebers zum Bestimmen der Komponenten $F_{\text{Sparallel}}$ und $F_{\text{Squer}}$ und
Figur 5   Unterlenker mit infolge einer angehängten Nutzlast angreifenden Kräften.

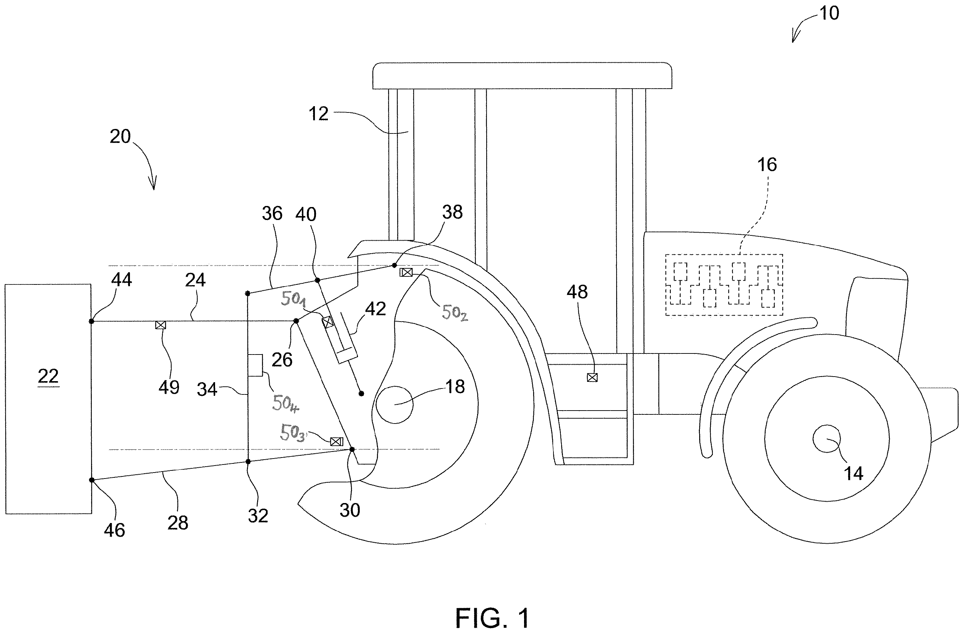

Die Figur 1 zeigt ein teilweise nur schematisch dargestelltes landwirtschaftliches Arbeitsfahrzeug 10 mit einer Kabine 12, einer Vorderachse 14 und einer Verbrennungskraftmaschine 16 zum Antrieb zumindest einer Hinterachse 18. An den Heckbereich des als Schlepper ausgebildeten Arbeitsfahrzeugs 10 ist ein nicht maßstabsgetreu und prinzipiell dargestellter Dreipunktkraftheber 20 angebracht. Von dem Dreipunktkraftheber 20 ist eine ebene Kinematik in der x-z-Ebene dargestellt. Der Dreipunktkraftheber 20 dient zum Heben beziehungsweise Tragen eines an ihm befestigten Anbaugeräts 22. Wie zuvor beschrieben können als Anbaugerät vielfältige Gerätschaften vorgesehen sein. Das Anbaugerät 22 kann als Nutzlast bezeichnet werden.

Der Dreipunktkraftheber 20 umfasst einen Oberlenker 24, der über eine Anlenkung 26 an dem Heckbereich des Schleppers gelenkig befestigt ist, und einen Unterlenker 28, der über eine Stützlager 30 ebenfalls an dem Heckbereich des Schleppers gelenkig befestigt ist. Der Unterlenker 28 ist über eine in einem Unterlenkergelenk 32 angreifende Hubspindel 34 mit dem einen Ende eines Hubarms 36 verbunden, der mit seinem anderen Ende über eine Anlenkung 38 gelenkig mit dem Schlepper verbunden ist. Der Hubarm 36 ist über einen in einem Hubarmgelenk 40 angreifenden und gegen den Schlepper abgestützten Hydraulikzylinder 42 gegenüber dem Schlepper verschwenkbar. Das Verschwenken des Hubarms 36 mittels des Hydraulikzylinders 42 wird über die Hubspindel 34 auf den Unterlenker 28 übertragen. Die Länge der Hubspindel 34 ist verstellbar, so dass Winkellagen des Hubarms 36 und des Unterlenkers 28 zueinander verstellt werden können. Oberlenker 24 und Unterlenker 28 sind auf der von dem Schlepper angewandten Seite über einen Oberlenkeranlenkpunkt 44 beziehungsweise einen Unterlenkeranlenkpunkt 46 mit dem Anbaugerät beziehungsweise der Nutzlast 22 verbunden. Die Anlenkung 26 und der Oberlenkeranlenkpunkt 44 können in vertikaler Richtung verstellt werden, so dass der Oberlenker 24 verschiedene vertikale Positionen zur Einstellung einer Masthöhe einnehmen kann. Auf eine Darstellung dieser Verstellmöglichkeit wird verzichtet.

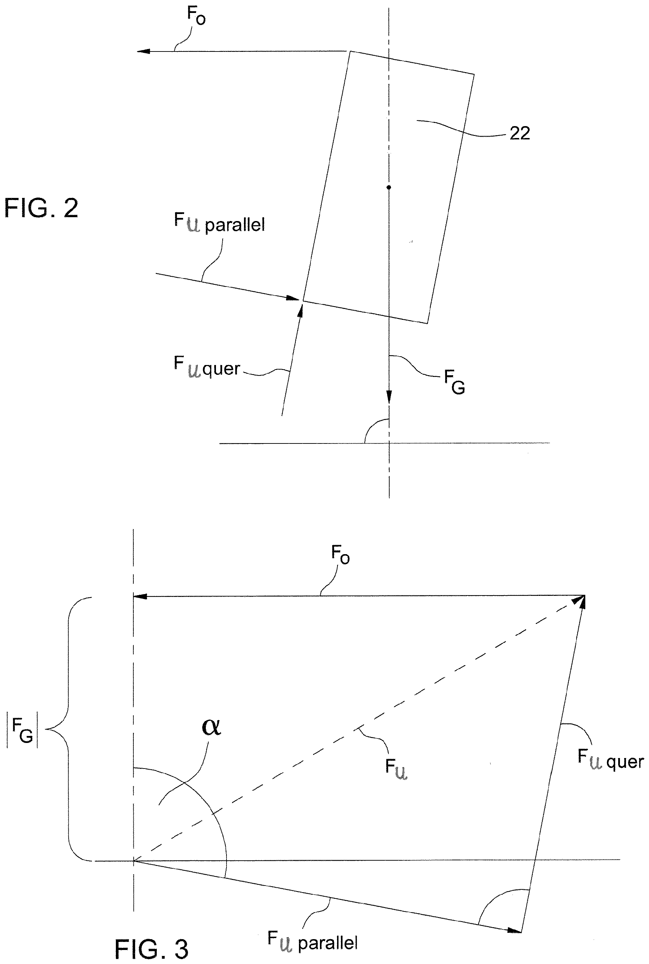

Figur 2 zeigt die an den Dreipunktkraftheber 20 angehängte Nutzlast 22 isoliert, wobei lediglich die angreifenden Kräfte dargestellt sind. Es ist die an der Nutzlast 22 im Masseschwerpunkt angreifende Gewichtskraft $F_G$ dargestellt, die senkrecht nach unten zeigt. Ferner greifen an dem Oberlenkeranlenkpunkt 44 die Oberlenkerhaltekraft $F_O$ und an dem Unterlenkerhaltepunkt 46 die parallel zum Unterlenker 28 wirkende Stützkraft $F_{Uparallel}$ und die quer zum Unterlenker 28 wirkende Stützkraft $F_{Uquer}$. Diese Kräfte können derart zueinander verschoben werden, dass sich der in Figur 3 gezeigte Kräfteplan ergibt.

Mit dem erfindungsgemäßen Verfahren kann der Betrag der Gewichtskraft $F_G$, der in der Figur 3 mit $|F_G|$ bezeichnet ist, bestimmt werden. Zunächst kann von der Gewichtskraft $F_G$ lediglich die Wirkungsrichtung bezogen auf den Unterlenker 28 mittels auf dem Schlepper angeordneten ersten Sensormitteln 48 in Form eines Beschleunigungsaufnehmers oder eines Neigungssensors bestimmen werden, so dass in dem Kräfteplan nach Figur 3 der Winkel a zwischen der Wirkungsrichtung von $F_G$ und dem Unterlenker 28 bekannt ist. Weiterhin kann der Betrag der Oberlenkerhaltekraft $F_O$ über zweite Sensormittel 49 in Form von Dehnmessstreifen oder über eine Verrechnung eines hydraulischen Drucks in einem hydraulischen ausgeführten Oberlenker 24 bestimmt werden. Die Wirkungsrichtung der Oberlenkerhaltekraft $F_O$ ist unbekannt.

Weiterhin sind zunächst die beiden Komponenten $F_{Uquer}$ und $F_{Uparallel}$ der Unterlenkerstützkraft $F_U$ unbekannt. Um beide Komponenten $F_{Uquer}$ und $F_{Uparallel}$ zu berechnen, muss zuvor aus der bekannten Kinematik des Dreipunktkrafthebers 20 der Betrag und die Wirkungsrichtung der Stangenkraft $F_S$ der Hubspindel 34 bestimmt werden. Dazu werden folgende Parameter benötigt beziehungsweise gemessen:

$p_{Zyl}$ hydraulischer Druck im Hydraulikzylinder 42; gemessen mittels dritter Sensormittel 50 in Form eines Drucksensors $50_1$ im Hydraulikzylinder 42;

$\varphi_H$ Winkel des Hubarms 36 bezogen auf ein festes Koordinatensystem des Schleppers; gemessen mittels dritter Sensormittel 50 in Form eines ersten Lagesensors $50_2$;

$I_1$ Abstand zwischen Stützlager 30 und Unterlenkergelenk 30;

$I_2$ Länge der Hubspindel 34.

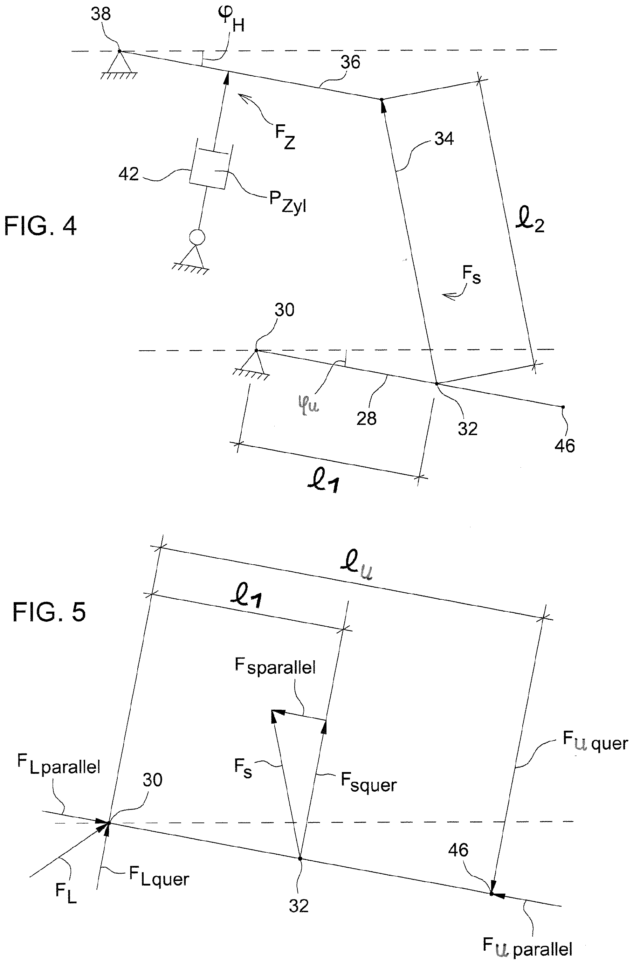

Die kinematischen Verhältnisse, die für eine Bestimmung des Betrages und der Wirkungsrichtung der Stangenkraft $F_S$ herangezogen werden, sind in Figur 4 schematisch dargestellt. Bei einer ersten Berechnungsmöglichkeit kann vorgesehen sein, dass aus dem hydraulischen Druck $p_{Zyl}$ die auf den Hubarm 36 ausgeübte Kraft $F_Z$ mittelbar bestimmt wird. Alternativ kann die Kraft $F_Z$ auch unmittelbar beispielsweise über Dehnmessstreifen bestimmt werden.

Alternativ können bei variabler Länge $I_2$ der Hubspindel 34 die Parameter Winkel $\varphi_U$ des Unterlenkers 28, welcher mit einem zweiten Lagesensor $50_3$ gemessen werden kann, oder Auszugslänge der Hubspindel 34, welche mit einen dritten Lagesensor $50_4$ gemessen werden kann, bestimmt werden.

Ist der Betrag und die Wirkungsrichtung der Stangenkraft $F_S$ bestimmt, kann diese in die Komponenten $F_{Squer}$ und $F_{Sparallel}$ bezogen auf den Unterlenker 28 zerlegt werden, wie dies in Figur 5 zusammen mit den Komponenten $F_{Uquer}$ und $F_{Uparallel}$ der Unterlenkerstützkraft $F_U$ dargestellt ist.

Über das Momentengleichgewicht um das Unterlenkergelenk 32 kann die Komponente $F_{Uquer}$ der Unterlenkerstützkraft $F_U$ bestimmt werden und zwar nach der Gleichung

$$F_{\text{Uquer}} = \frac{F_{\text{Ssenkrecht}} * l_1}{l_{\text{U}}}$$

Über die mit einer dem Stützlager 30 zugeordneten Kraftmesseinrichtung 52 ermittelte Lagerkraft $F_{\text{L}}$ in der Stützlager 30 kann die Komponenten $F_{\text{Uparallel}}$ der Unterlenkerstützkraft $F_{\text{U}}$ bestimmt werden und zwar nach der Gleichung

$$F_{\text{Uparallel}} = -F_{\text{Sparallel}} + \sqrt{F_{\text{L}}^2 - (F_{\text{Usenkr}} - F_{\text{Ssenkr}})^2}$$

Bei der Kraftmesseinrichtung 52 kann es sich beispielsweise um einen Biegebolzen handeln.

Nachdem nun die beiden Komponenten $F_{\text{Uquer}}$ und $F_{\text{Uparallel}}$ der Unterlenkerstützkraft $F_{\text{U}}$ und der Betrag der Oberlenkerhaltekraft $F_{\text{O}}$ bekannt sind, kann über den in der Figur 3 dargestellten Kräfteplan der Betrag der Gewichtskraft $F_{\text{G}}$ bestimmt werden. Hierzu bildet die Spitze der Kraftkomponente $F_{\text{Uquer}}$ den Mittelpunkt eines Kreises, dessen Radius entsprechend dem Betrag der Oberlenkerhaltekraft $F_{\text{O}}$ bemessen ist. Obwohl die Wirkungsrichtung der Oberlenkerhaltekraft $F_{\text{O}}$ unbekannt ist, ergibt sich der Betrag der Gewichtskraft $F_{\text{G}}$ aus dem Tangentialpunkt, mit dem der Kreis um die Spitze der Kraftkomponente $F_{\text{Uquer}}$ die Linie der Wirkungsrichtung von $F_{\text{G}}$ berührt, und des Abstandes dieses Tangentialpunktes zu dem Schnittpunkt der Wirkungsrichtung von $F_{\text{G}}$ mit der Kraftkomponente $F_{\text{Uparallel}}$. Ein Tangentialpunkt ergibt sich bei exakter Messung der in die Berechnung eingegangenen Größen Betrag der Oberlenkerkraft $F_{\text{O}}$, Wirkungsrichtung der Gewichtskraft $F_{\text{G}}$, hydraulischer Druck $p_{\text{Zyl}}$ im Hydraulikzylinder 42, Winkel $\varphi_{\text{H}}$ des Hubarms 36 und Unterlenkerstützkraft $F_{\text{U}}$. Nur in einem Idealfall ergibt sich ein Tangentialpunkt. Regelmäßig ergeben sich zwischen dem Kreis um die Spitze der Kraftkomponente $F_{\text{Uquer}}$ und der Linie der Wirkungsrichtung von $F_{\text{G}}$ zwei Schnittpunkte und zwar unabhängig von Messgenauigkeiten. Durch eine Plausibilitätsabschätzung muss der korrekte Schnittpunkt bestimmt werden. Bei Messungenauigkeiten ist der Radius entweder zu groß oder zu klein. Ist er zu klein gibt es weder Schnittpunkte noch einen Tangentialpunkt. Dann kann der kürzeste Abstand zwischen dem Kreis und Wirkungsrichtung $F_{\text{G}}$ mit einer Strecke dargestellt werden. Schnittpunkt der Strecke mit der Wirkrichtung $F_{\text{G}}$ ist der gesuchte Schnittpunkt.

Bezugszeichenliste

| | |
|---|---|
| 10 | landwirtschaftliches Arbeitsfahrzeug |
| 12 | Kabine |
| 14 | Vorderachse |
| 16 | Verbrennungskraftmaschine |
| 18 | Hinterachse |
| 20 | Dreipunktkraftheber |
| 22 | Anbaugerät |
| 24 | Oberlenker |
| 26 | Anlenkung |
| 28 | Unterlenker |
| 30 | Stützlager |
| 32 | Unterlenkergelenk |
| 34 | Hubspindel |
| 36 | Hubarm |
| 38 | Anlenkung |
| 40 | Hubarmgelenk |
| 42 | Hydraulikzylinder |
| 44 | Oberlenkeranlenkpunkt |
| 46 | Unterlenkeranlenkpunkt |
| 48 | ersten Sensormittel |
| 49 | zweite Sensormittel |
| 50 | dritte Sensormittel |
| 52 | Kraftmesseinrichtung |

**Patentansprüche**

1. Verfahren zur Bestimmung einer Gewichtskraft $F_G$ einer von einem landwirtschaftlichen Arbeitsfahrzeug (10) über einen Dreipunktkraftheber (20) getragenen Nutzlast (22),
bei dem ein Betrag der Gewichtskraft $F_G$ aus

- einer mittels auf dem Schlepper angeordneten ersten Sensormitteln (48), in Form eines Beschleunigungsaufnehmers oder eines Neigungssensors, bestimmten Wirkungsrichtung der Gewichtskraft $F_G$ und
- einem mittels zweiten Sensormitteln (49), in Form eines Dehnmessstreifens zur Erfassung einer Kraft des Oberlenkers (24) oder eines Drucksensors zur Erfassung eines hydraulischen Drucks des hydraulisch ausgeführten Oberlenkers (24), bestimmten Betrag einer Haltekraft $F_O$ eines Oberlenkers (24) des Dreipunktkrafthebers (20) und
- einer mittels einer Kraftmesseinrichtung (52) bestimmten Lagerkraft $F_L$ in einem Stützlager (30) eines Unterlenkers (28) des Dreipunktkrafthebers (20) ermittelt wird,

   **gekennzeichnet dadurch, dass** ein Betrag der Gewichtskraft $F_G$ aus einer mittels dritten Sensormitteln (50), in Form eines Drucksensors ($50_1$) zur Erfassung eines hydraulischen Drucks in einem Hydraulikzylinder (42) des Dreipunktkrafthebers (20), bestimmten Stangenkraft $F_S$ einer Hubspindel (34) des Dreipunktkrafthebers (20) ermittelt wird, wobei die dritten Sensormittel (50) einen ersten Lagesensor ($50_2$) zur Erfassung einer Winkelposition $\varphi_H$ eines Hubarms (36) des Dreipunktkrafthebers (20), und
   einen zweiten Lagesensor ($50_3$) zur Erfassung einer Winkelposition $\varphi_U$ des Unterlenkers (28), und/oder
   einen dritten Lagesensor ($50_4$) zur Erfassung einer Auszugslänge der Hubspindel (34) umfassen.

2. Verfahren nach Anspruch 1, **dadurch gekennzeichnet, dass** mittels eines Momentengleichgewichts um das Stützlager (30) eine senkrecht auf den Unterlenker (28) wirkende Querkraft $F_{Uquer}$ bestimmt wird.

3. Verfahren nach Anspruch 1 oder 2, **dadurch gekennzeichnet, dass** mittels der Lagerkraft $F_L$ eine längs auf den Unterlenker (28) wirkende Längskraft $F_{Uparallel}$ bestimmt wird.

4. Verfahren nach Anspruch 1, **dadurch gekennzeichnet, dass** eine Wirkungsrichtung und ein Betrag der Stangenkraft $F_S$ aus dem hydraulischen Druck in einem Hydraulikzylinder (42), der Winkelposition $\varphi_H$ des Hubarms (36), einem Abstand $I_1$ des Stützlagers (30) von einem Anlenkpunkt (32) der Hubspindel (34) an den Unterlenker (28) und der Länge $I_2$ der Hubspindel (34) ermittelt wird.

5. Verfahren nach Anspruch 1, **dadurch gekennzeichnet, dass** eine Wirkungsrichtung und ein Betrag der Stangenkraft $F_S$ aus dem hydraulischen Druck in einem Hydraulikzylinder (42), der Winkelposition $\varphi_H$ des Hubarms (36), der Winkelposition $\varphi_U$ des Unterlenkers (28) und einem Abstand $I_1$ des Stützlagers (30) von einem Anlenkpunkt (32) der Hubspindel (34) an den Unterlenker (28) ermittelt wird.

6. Verfahren nach einem der Ansprüche 1 bis 5, **dadurch gekennzeichnet, dass** der Betrag der Gewichtskraft $F_G$ in einem von der Wirkungsrichtung der Gewichtskraft $F_G$, dem Betrag der Haltekraft $F_O$ und einer Unterlenkerstützkraft $F_U$ aufgespannten Kräftedreieck als Abstand von dem Angriffspunkt der Unterlenkerstützkraft $F_U$ zu einem Schnittpunkt zwischen dem senkrecht auf der Wirkungsrichtung der Gewichtskraft $F_G$ stehenden Betrag der Haltekraft $F_O$ bestimmt wird.

7. Einrichtung zur Durchführung eines Verfahrens nach den Ansprüchen 1 bis 6 zur Bestimmung einer Gewichtskraft $F_G$ einer von einem landwirtschaftlichen Arbeitsfahrzeug (10) über einen Dreipunktkraftheber (20) getragenen Nutzlast (22).

**Claims**

1. Method for determining a weight $F_G$ of a payload (22) which is carried by an agricultural working vehicle (10) by means of a three-point power linkage (20), in which method an absolute value of the weight $F_G$ is determined from

- a direction of action of the weight $F_G$ which is determined by means of first sensor means (48), in the form of an acceleration pickup or an inclination sensor arranged on the tractor, and
- an absolute value of a holding force $F_O$ on the top link (24) of the three-point power linkage (20), determined by means of second sensor means (49) in the form of a strain gauge for detecting a force of the top link (24) or a pressure sensor for detecting a hydraulic pressure of the hydraulically embodied top link (24), and
- a bearing force $F_L$, determined by means of a force-measuring device (52), in a supporting bearing (30) of a bottom link (28) of the three-point power linkage (20)

**characterized in that** an absolute value of the weight $F_G$ is determined from a rod force Fs of a lifting spindle (34) of the three-point power linkage (20), determined by means of a third sensor means (50) in the form of a pressure sensor ($50_1$) for detecting a hydraulic pressure in a hydraulic cylinder (42) of the three-point power linkage (20), wherein the third sensor means (50) comprise a first position sensor ($50_2$) for detecting an angular position $\varphi_H$ of a lifting arm (36) of the three-point power linkage (20), and a second position sensor ($50_3$) for detecting an angular position $\varphi_U$ of the bottom link (28), and/or a third position sensor ($50_4$) for detecting an extension length of the lifting spindle (34).

2. Method according to Claim 1, **characterized in that** a transverse force $F_{Uquer}$ which acts perpendicularly on the bottom link (28) is determined by means of an instantaneous equilibrium around the supporting bearing (30).

3. Method according to Claim 1 or 2, **characterized in that** a longitudinal force $F_{Uparallel}$ acting longitudinally on the bottom link (28) is determined by means of the bearing force $F_L$.

4. Method according to Claim 1, **characterized in that** a direction of action and an absolute value of the rod force $F_S$ is determined from the hydraulic pressure in a hydraulic cylinder (42), the angular position $\varphi_H$ of the lifting arm (36), a distance $I_1$ of the supporting bearing (30) from a coupling point (32) of the lifting spindle (34) to the bottom link (28) and the length $I_2$ of the lifting spindle (34).

5. Method according to Claim 1, **characterized in that** the direction of action and an absolute value of the rod force $F_S$ is determined from the hydraulic pressure in a hydraulic cylinder (42), the angular position $\varphi_H$ of the lifting arm (36), the angular position $\varphi_U$ of the bottom link (28) and a distance $I_1$ of the supporting bearing (30) from a coupling point (32) of the lifting spindle (34) to the bottom link (28).

6. Method according to one of Claims 1 to 5, **characterized in that** the absolute value of the weight $F_G$ is determined in a force triangle, extended from the direction of action of the weight $F_G$, the absolute value of the holding force $F_O$ and a bottom link supporting force Fu, at a distance from the point of engagement of the bottom link supporting force $F_U$ to an intersection point between the absolute value of the holding force $F_O$ which is perpendicular with respect to the direction of action of the weight $F_G$.

7. Device for carrying out a method according to Claims 1 to 6 for determining a weight $F_G$ of a payload (22) which is carried by an agricultural working vehicle (10) by means of a three-point power linkage (20).

**Revendications**

1. Procédé de détermination d'un poids $F_G$ d'une charge utile (22) portée par un véhicule de travail agricole (10) par le biais d'un relevage à trois points (20), avec lequel une valeur du poids $F_G$ est déterminée à partir

- d'une direction d'action du poids $F_G$, déterminée au moyen de premiers moyens de détection (48) disposés sur le tracteur, sous la forme d'un enregistreur d'accélération ou d'un capteur d'inclinaison et
- d'une valeur d'une force de maintien $F_O$ d'un bras oscillant supérieur (24) du relevage à trois points (20), déterminée au moyen de deuxièmes moyens de détection (49) sous la forme d'une jauge d'allongement destinée à détecter une force du bras oscillant supérieur (24) et d'un capteur de pression destiné à détecter une pression hydraulique du bras oscillant supérieur (24) réalisé sous forme hydraulique et
- d'une force d'appui $F_L$ dans un palier d'appui (30) d'un bras oscillant inférieur (28) du relevage à trois points (20), déterminée au moyen d'un dispositif de mesure de force (52),

**caractérisé en ce qu'**une valeur du poids $F_G$ est déterminée à partir d'une force de barre Fs d'une vis de hissage (34) du relevage à trois points (20), déterminée au moyen de troisièmes moyens de détection (50) sous la forme d'un capteur de pression ($50_1$) destiné à détecter une pression hydraulique dans un vérin hydraulique (42) du relevage à trois points (20), les troisièmes moyens de détection (50) comprenant un premier capteur de position ($50_2$) destiné à détecter une position angulaire $\varphi_H$ d'un bras de levage (36) du relevage à trois points (20) et un deuxième capteur de position ($50_3$) destiné à détecter une position angulaire $\varphi_U$ du bras oscillant inférieur (28) et/ou un troisième capteur de position ($50_4$) destiné à détecter une longueur d'extraction de la vis de hissage (34) .

2. Procédé selon la revendication 1, **caractérisé en ce qu'**une force transversale $F_{Uquer}$ agissant perpendiculairement sur le bras oscillant inférieur (28) est déterminée au moyen d'un équilibre des moments autour du palier d'appui (30).

3. Procédé selon la revendication 1 ou 2, **caractérisé en ce qu'**une force longitudinale $F_{Uparallel}$ agissant en longueur sur le bras oscillant inférieur (28) est déterminée au moyen de la force d'appui $F_L$.

4. Procédé selon la revendication 1, **caractérisé en ce qu'**une direction d'action et une valeur de la force de barre $F_S$ sont déterminées à partir de la pression hydraulique dans un vérin hydraulique (42), de la position angulaire $\varphi_H$ du bras de levage (36), d'un écart $I_1$ entre le palier d'appui (30) et un point d'articulation (32) de la vis de hissage (34) au niveau du bras oscillant inférieur (28) et de la longueur $I_2$ de la vis de hissage (34).

5. Procédé selon la revendication 1, **caractérisé en ce qu'**une direction d'action et une valeur de la force de barre $F_S$ sont déterminées à partir de la pression hydraulique dans un vérin hydraulique (42), de la position angulaire $\varphi_H$ du bras de levage (36), de la position angulaire $\varphi_U$ du bras oscillant inférieur (28) et d'un écart $I_1$ entre le palier d'appui (30) et un point d'articulation (32) de la vis de hissage (34) au niveau du bras oscillant inférieur (28).

6. Procédé selon l'une des revendications 1 à 5, **caractérisé en ce que** la valeur du poids $F_G$ est déterminée dans un triangle formé par la direction d'action du poids $F_G$, la valeur de la force de maintien $F_O$ et une force de soutien de bras oscillant inférieur $F_U$ sous la forme de l'écart entre le point d'attaque de la force de soutien de bras oscillant inférieur $F_U$ et un point d'intersection entre la valeur de la force de maintien $F_O$ qui est perpendiculaire à la direction d'action du poids $F_G$.

7. Dispositif pour mettre en oeuvre un procédé selon les revendications 1 à 6 pour déterminer un poids $F_G$ d'une charge utile (22) portée par un véhicule de travail agricole (10) par le biais d'un relevage à trois points (20) .

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0625696 A1
- EP 0433669 A1